# EUROPEAN PATENT SPECIFICATION

(11) **EP 0 915 802 B1**
(45) Date of publication and mention of the grant of the patent: **06.11.2002**
(21) Application number: 96927369.7
(22) Date of filing: 09.08.1996
(51) Int. Cl.: B64D 1/04

(54) **COLD GAS EJECTOR RACK**
DURCH KALTES GAS BETÄTIGTE AUSSTOSSVORRICHTUNG
RAMPE D'EJECTION POUR GAZ FROIDS

(43) Date of publication of application: 19.05.1999
(73) Proprietor: MCDONNELL DOUGLAS CORPORATION, Huntington Beach, CA 92647-2048 (US)
(72) Inventor: JAKUBOWSKI, Thaddeus, Jr., Mesa, AZ 85204 (US)
(74) Representative: Enskat, Michael Antony Frank
(86) International application number: US9612981
(87) International publication number: WO98006624

(56) References cited:
- GB-A- 2 266 579
- US-A- 4 095 762
- US-A- 4 388 853
- US-A- 4 444 085
- US-A- 4 520 975
- US-A- 4 552 327
- US-A- 4 746 083
- US-A- 4 934 667
- US-A- 5 351 597
- US-A- 5 487 322

## Description

### Background of the Invention

This invention relates generally to store carriers for mounting a releasable store on an aircraft and, more particularly, to a stores ejection system from which a store is released with ejective force applied at forward and aft locations by thrusters which are actuated by cold, clean pressurized gas, such as air.

The store referred to herein may be used to contain munitions (i.e. "bombs"), or to contain other material to be dropped from an aircraft. Military aircraft used to dispense bombs, rockets, and other stores in flight usually include racks located beneath the wings and fuselage designed to release the stores upon command. Typical racks are shown in U.S. Patents No. 4,043,525 and 4,347,777, both by the same inventor and assignee as in the present application and incorporated herein by reference.

At the time of target acquisition, a release mechanism is activated which results in mechanical release and subsequent forcible ejection of that weapon away from the aircraft. State of the art bomb ejector racks utilize pyrotechnic (explosive) cartridges which, on ignition, generate high pressure gas for actuating the mechanical release mechanism, as well as for providing high pressure to ejection rams which forcibly eject the store from the aircraft. This method was originated at Douglas Aircraft Company (now an operating division of McDonnell Douglas Corporation) in 1944, and is the current method used on virtually all weapon release devices.

While such pyrotechnic cartridges provide a weight efficient means of storing and releasing energy as a power source, they also have certain undesirable characteristics. For example, a great deal of cleaning and maintenance is required after firing a pyrotechnic device. When fired, the chemical burning of the explosive charge within the pyrotechnic cartridge results in a large amount of residue being deposited within the system. This residue also contains moisture and corrosives. After burning, the moisture in the system tends to further gather debris, form ice, and otherwise clog the internal and external workings of the bomb rack mechanism. Thus, if not properly disassembled and cleaned after a scheduled number of firings, at the cost of a great deal of labor and downtime for the aircraft, the stores rack will quickly become corroded and unreliable, and the required replacement maintenance interval will become unacceptably short.

Other problems associated with the use of pyrotechnic cartridges in bomb ejector systems include the necessity for use of hazardous cleaning solvents, which pose their own unique stowage, use, handling, and disposal considerations. Additionally, ground crew post-flight action is required to remove and dispose of the spent cartridges. Removal of live cartridges is required prior to off-loading unreleased stores, further increasing crew workload and turnaround time. Furthermore, prior to cartridge installation, the ground crew must utilize special equipment to conduct stray voltage checks, in order to assure that an inadvertent firing will not occur. Logistically, adequate supplies of cartridges must be maintained to support bomb rack operation, which imposes additional unique shipping, storage, and handling requirements because of their explosive nature. Cartridges have a limited shelf life as well, before becoming unreliable, so date monitoring and inventory control is necessary. Finally, parts life of the stores rack is limited because of the effects of pyrotechnic gas erosion, resulting in significant logistic and cost burdens.

Stores ejection systems are known in the prior art which avoid the use of pyrotechnic cartridges. For example, U.S. Patent No. 4,204,456 to Ward discloses a pneumatic bomb ejector, which uses a suitable pressurized gas, such as air or nitrogen, as a stored energy source for actuating the ejector. However, the system is disclosed as being utilizable only with a particular type of customized mechanism which does not employ ejector rams to forcibly eject the store. This means that it may only be used for applications wherein it is not necessary to ensure that the store clears the aircraft slipstream by forcibly ejecting it away from the aircraft. Furthermore, the Ward system is not adaptable to the standardized ejection systems in use in almost all existing military aircraft, limiting its practical applicability. Another problem with the Ward system is that the gas is pre-charged prior to operation. However, as the aircraft climbs to altitude, and the ambient temperature drops, the pressure level drops as well. As the pressure level varies, so does the performance output. Without an onboard pressure maintenance system, the stores ejector may not operate reliably.

Another device which avoids the use of pyrotechnic cartridges is disclosed in U.S. Patent No. 4,095,762 to Holt. This device includes a system which uses accumulator stored gas (nitrogen is disclosed) as an energy source, but uses a hydraulic subsystem as the energy transfer medium; i.e. the medium used to actuate the ram ejectors. As in Ward, the patentee apparently believed that the accumulator pressure alone is inadequate to function to actuate the ram ejectors. Ward chose therefore to eliminate ram ejectors, while Holt chose to employ a hydraulic energy transfer medium. Disadvantages of Holt's approach include a relatively complicated and heavy dual fluid system, and no onboard pressure replenishment system. Thus, as in the Ward system, as the pressure level varies due to temperature changes, so too does performance output.

An additional problem with the Holt system is that, at the end of the stores ejection event, recocking is required to retract the pistons. When using the stored accumulator pressure, this is accomplished manually after landing. The implication is that some residual pressure remains in the accumulator, which may pose safety concerns. Additionally, the ejector pistons remain extended until after landing and discharging, which increases both drag and radar signature, and is therefore a generally undesirable characteristic.

Still another prior art approach is discussed in U.S. Patent No. 4,905,568 to Hetzer et al. This patent discloses an ejector mechanism which, like that of Holt, utilizes high pressure gas (again preferably nitrogen) as an energy source, with hydraulics as the energy transfer medium. Hetzer does attempt to compensate for pressure variations in the stored accumulator gas by employing heating coils to alter temperature of the gas as altitude changes. However, no onboard pressure regeneration or recharging system is disclosed or suggested.

The document GB 2 266 579 discloses a stores ejection system according to the preamble of claim 1.

The document US 4 444 085 discloses a multiple-launch sonobuoy launcher system in which a plenum chamber is repressurized by an on-board source.

What is needed, therefore, is a stores ejection system which employs ejector ram pistons for forcibly ejecting the store away from the aircraft, yet is much more simple, easy to maintain, and durable than systems of that type which are currently available.

### Summary of Invention

The aforementioned problems are addressed by a renewable energy source ejector rack and system for retaining and releasing stores on an aircraft, which has on-board pressurization capability, employs a single pressurization system for two or more release mechanisms, and uses air or other clean non-pyrotechnic pressurized gases both as the energy source and energy transfer medium. The aircraft contains a miniature compressor and purification system. Ambient air is filtered, dried and stored as an energy medium. Since the compressor system is onboard, the pressure can be constantly maintained regardless of temperature change. Using purified air eliminates the excessive cleaning burden imposed when using pyrotechnics, and eliminates the sealing problems associated with hydraulics.

More specifically, a stores ejection system according to claim 1 is provided. Significantly, the on-board source of pressurized gas is adapted to re-pressurize the accumulator in the actuation system whenever the pressure in the accumulator falls a predetermined amount below the specified operational pressure.

An important feature of the invention is that the pressurized gas from the on-board pressurization system functions as both the source of energy and as the energy transfer medium for actuating the release mechanism to release and jettison the store.

The invention, together with additional features and advantages thereof, may best be understood by reference to the following description taken in conjunction with the accompanying illustrative drawing.

### Brief Description of the Drawings

Fig. 1 is a schematic view of the stores ejection system of the invention;
Fig. 2 is a side view of a suspension and release equipment (S & RE) module to be employed in the inventive stores ejection system, illustrating the various elements and their arrangement within the system; and
Fig. 3 is an enlarged partial cross-sectional view of the pneumatic actuation system employed in the S & RE module shown in Fig. 2.

### Detailed Description of the Drawings

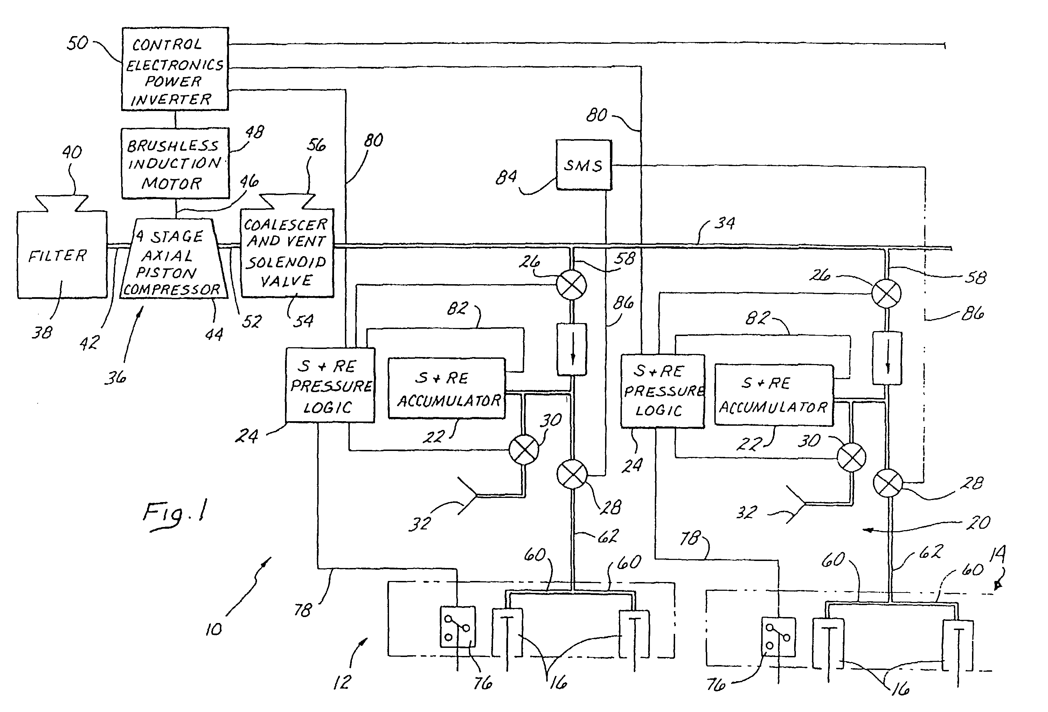

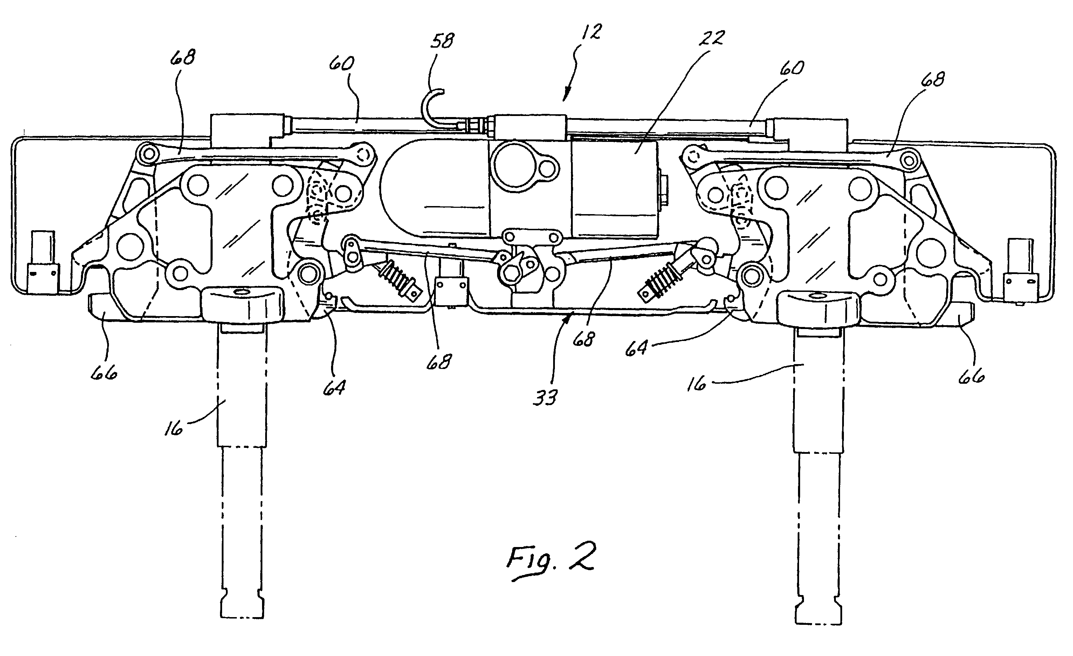

Referring now more particularly to Fig. 1, a pneumatically driven stores ejection system 10 is illustrated schematically. In the illustrated preferred embodiment, two S & RE modules 12 and 14 are included in the system 10, though in actuality any number of such modules may be employed, depending upon the configuration of the aircraft and weapons system with which the system 10 is to be used. The S & RE modules 12, 14 are basically identical stand-alone mechanical units, each preferably comprising a mechanism for releasably retaining and jettisoning a store, including a pair of ejector pistons 16 for thrusting the store clear of the aircraft, and an actuation system for actuating the ejector pistons, including an accumulator 22, an accumulator pressure logic controller 24, an enable valve 26, an ejection dump valve 28, an over-pressure valve 30, and an over-pressure vent 32. In the preferred embodiment, all of these elements are commonly housed within the housing 33 of the module 12, 14 (Fig. 2), for compactness and modularity, but various arrangements could be employed within the scope of the invention, including arrangements wherein some or all of the elements other than the pistons 16 are housed within the aircraft remote from the housing 33.

A manifold conduit 34 provides pressurized fluid, preferably compressed air, from a remotely located pressurization unit 36 to each of the modules 12, 14. Preferably, the pressurization unit incorporates ambient air filtration by means of a filter unit 38 having an ambient air inlet 40. The air then travels via a flow passage 42 through a compressor 44. While a four stage axial piston compressor is preferred, any known type suitable for the inventive application may be alternatively installed. The compressor is preferably driven through a shaft 46 by an electric motor 48 of known type, which in turn is controlled by a control unit 50. Upon exiting the compressor 44, the compressed air travels through a flow passage 52 into a coalescer and vent solenoid valve unit 54, which provides a dual function of drying the air and also operating as a solenoid valve, for purposes to be described hereinbelow. From the unit 54, the dry air exits into the manifold conduit 34, while the excess moisture is vented through a moisture vent 56. While the pressurization unit 36 shown and described is preferred, many alternate embodiments are possible. For example, the filter unit 40 is utilized to minimize wear to the system due to impurities in the ambient air, but is not required. Furthermore, the compressor 44 could alternatively be driven hydraulically or may be driven by or comprise a portion of the main aircraft engines. Also, while air is preferred, any known clean gas could be used, and the unit 36 could actually comprise part of an onboard oxygen or nitrogen generating system. Dry air is desirable in order to minimize system corrosion and because water freezes at high altitude ambient temperatures, resulting in further corrosive conditions within the system. Thus, the use of a drying unit, such as the coalescer unit 56, is preferred. However, the system could be operated without such a unit, albeit with increased required maintenance. Finally, while a single gas generator 36 operated to supply gas to plural S & RE modules is preferred, independent generators for each S & RE module could be used as well, particularly since many available gas generating systems are relatively light and miniaturized, so that undue weight and space penalties are not imposed.

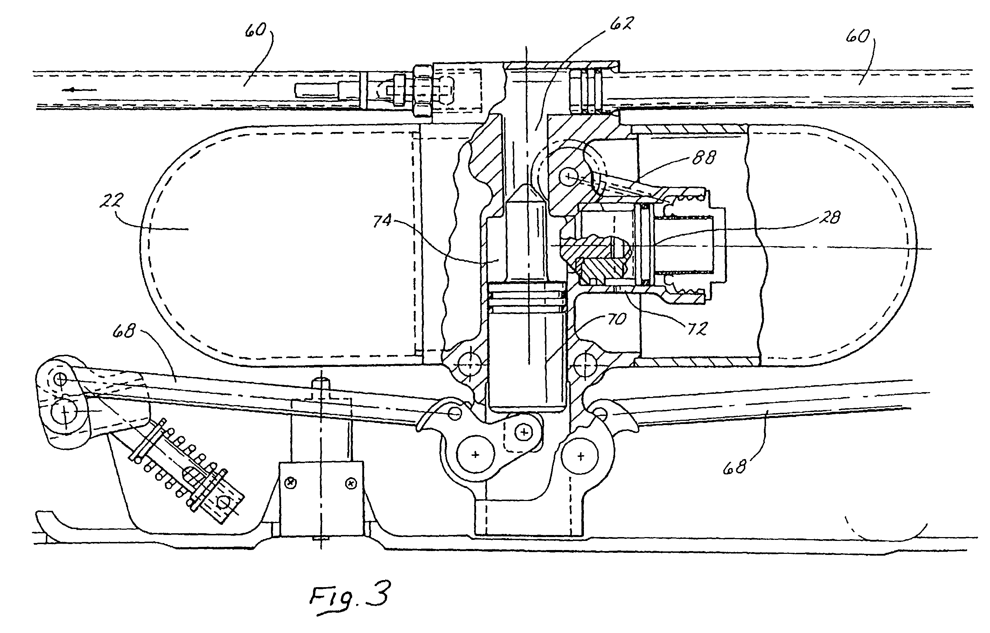

Now with reference to Figs. 2 and 3, certain particular preferred structural details of the S & RE module 12 are illustrated. It should, of course, be noted that the structure of each of the S & RE modules forming a part of the system 10 are essentially identical, so that Figs. 2 and 3 could just as well illustrate the S & RE module 14, or any other S & RE module forming a part of the system 10. It should further be noted that this preferred design minimizes the changes necessary to adapt the invention to commercially available S & RE systems. Thus, with the exception of the accumulator and related structure, including the dump valve 28, the illustrated stores ejection system is conventional.

Structurally, the compressor feed line 58 (Figs. 1 and 2) draws pressurized air from the manifold line 34 into the accumulator 22. Passages 60 provide fluid communication between the accumulator 22 and the pistons 16, in order to actuate the pistons at a desired time, drawing air from a dump valve exit flow line 62 downstream of the dump valve 28. Inside hooks 64 and outside hooks 66 of a type well known in the art are preferably employed to releasably secure the store to the S & RE module in well known fashion. The hooks 64, 66 may be actuated to an open position by means of a hinged hook opening linkage 68, as is also well known in the art, which in turn is driven by a hook opening piston 70 (Fig. 3). The piston 70 is reciprocatingly driven when the dump valve 28, which is pilot pressure-actuated, is driven from the illustrated closed position to an open position, thereby permitting pressurized air from the accumulator 22 to travel through port 72 into the valve area, from whence it further flows into piston chamber 74, thus acting to drive the piston 70 reciprocatingly downwardly to actuate the hook opening linkage 68. At the same time, pressurized air is also permitted by the open valve 28 to flow through the dump valve exit flow line 62 and into the passages 60, thereby actuating the ejector pistons 16 to thrust the store away from the aircraft simultaneously with its release from the hooks 64, 66.

In operation, each S & RE module 12, 14 is initially in an unpressurized state. Loading of a store onto an S & RE module 12, 14 triggers a "store present" signal on a store present switch 76 provided in each module 12, 14. This signal is transmitted by a control line 78 to the pressure logic controller 24, which further transmits it through a second control line 80 to the control unit 50. When the aircraft electrical system is powered up, the "store present" signal causes the control unit 50 to initiate the pressurization unit 36 by starting the compressor 44. Pressurized air thus flows through the manifold conduit 34 and into each of the S & RE modules 12, 14 through feed lines 58. When pressure in the accumulator 22 reaches a prescribed pressure, which in the preferred embodiment is approximately 6000 psi, as detected by the pressure logic controller 24 via a third control line 82, the enable valve 26 (which is preferably a solenoid-operated check valve) closes, isolating the S & RE module 12, 14. When all S & RE modules reach the prescribed pressure, the remotely located pressurization system 36 is shut down. Each S & RE monitor and control system 24 continuously monitors accumulator pressure and periodically activates the pressurization system 36 or vents the accumulator through the over-pressure valve 30 and over-pressure vent 32 to maintain the prescribed pressure. The aircraft stores management system (SMS) 84, which is preferably of a type well known in the art, controls stores release. On the release command by the SMS 84, through a fourth control line 86, the pilot pressure-actuated high flow rate ejection dump valve 28 is actuated to an open position, permitting pressurized air from the accumulator 22 to flow through port 72 (Fig. 3) into the valve area, then into the piston chamber 74, where it simultaneously drives the piston 70 downwardly to release the hooks 64, 66 while also flowing through passages 62 and 60 to pressurize and drive each of the ejector pistons 16 to their extended positions, thus fully releasing and thrusting the store clear of the aircraft. As the hooks 64, 66 open, the store present switch 76 detects a "store gone" condition, which is transmitted to the control units 24, 50. The controller 24 ensures that its corresponding check valve 26 remains closed, isolating the S & RE system from further pressurization. At the end of the ejector piston stroke, vent ports 88 (Fig. 3) are exposed, preferably discharging substantially all residual accumulator pressure and permitting the spring loaded ejector pistons to retract to their stowed position. Thus, unlike prior art systems, the S & RE system may be operated to remain fully discharged and dormant after firing its store, resulting in both greater flight safety and a safer environment for working on the aircraft after landing. Alternatively, it may sometimes be desirable to retain some of the residual accumulator pressure to reduce the charge time and power consumption necessary to recharge the system for the next firing.

Therefore, it may be seen by reviewing the foregoing description of the invention that the pneumatically driven system of the invention has several advantages over other prior art approaches. Operation of the inventive S & RE system utilizing pneumatics is virtually identical to that of an S & RE system driven pyrotechnically, thus reducing risk and exposure. Using pneumatics yields a simplified mechanical design. As with pyrotechnics, the pneumatic system is designed to release its stored energy in the form of high pressure gas, drive actuation and ejection pistons, and subsequently vent all excess pressure to atmosphere. At the end of the event, the spring-loaded ejection pistons return to their original position. Furthermore, if the aircraft returns with the store on board, the vent valve 30 can be actuated to dump accumulator pressure to prevent unintended release.

Use of pneumatics in lieu of pyrotechnics provides several operational benefits. Pneumatic S & RE systems preferably operate with purified dry air, thus eliminating the build-up of residue and corrosive materials produced when using pyrotechnics. Cleaning requirements after firing are eliminated and corrosion control maintenance activities are limited to environmental conditions. Electrical stray voltage checks requiring specialized ground test equipment are eliminated and crew work load and turnaround time is reduced. From a logistics standpoint, the pyrotechnic cartridge-imposed requirements for specialized handling, inventory control, date control, storage and disposal are eliminated.

In comparison to designs using other energy transfer media such as hydraulics, a pneumatic system greatly reduces complexity and part count. When utilizing pneumatics, the need for return side valves, accumulators, piping, seals, etc. is eliminated. Fewer parts result in higher reliability, lower maintenance, and reduced logistical support. Ground support equipment required for fluid handling, storage, filtration prior to usage, and disposal of the hazardous fluid waste is eliminated. Repair and tear down is simplified since there is no fluid to contend with. The use of pneumatics permits the fabrication of components from light-weight materials such as aluminum, titanium, and/or composites, which typically cannot be used within a pyrotechnic gas system due to the high temperature erosive characteristics of pyrotechnics. Castings may even be used in lower pressure levels in the pneumatic system, thereby improving system efficiency and reducing machine time and part count, thus lowering fabrication costs. Periodic tear down, repair, and replacement, caused by pyrotechnic erosion, is substantially eliminated, thereby significantly increasing S & RE service life and reliability while simultaneously reducing maintenance.

While this invention has been described with respect to various specific examples and embodiments, it is to be understood that the invention is not limited thereto and that it can be variously practiced within the scope of the following claims.

## Claims

1. A stores ejection system (10) for mounting a jettisonable store on an aircraft, the stores ejection system using a pressurized non-pyrotechnic gas as the source of energy and the transfer mechanism and comprising:
at least one pneumatically-driven release and jettison mechanism (16) for releasably mounting the store; and
an actuation system for the release mechanism (16), including an accumulator (22) for receiving and storing the pressurized gas, a dump valve (28), and a controller (24) for actuating the dump valve (28) to an open position responsive to a control signal to release and jettison the store, the dump valve (28) when actuated functioning to permit the pressurized gas in the accumulator (22) to flow to the release mechanism (16), thereby actuating the release mechanism to jettison the store;
**characterised by** an on-board source (44) of the gas for providing the source (44) of energy and the transfer mechanism (16); and in that said accumulators receives and stores said pressurized gas from said on-board source of pressurized gas at a specified operating pressure,
wherein the on-board source (44) of pressurized gas is adapted to re-pressurize the accumulator (22) in the actuation system whenever the pressure in the accumulator (22) falls a predetermined amount below the specified operating pressure.

2. A system according to Claim 1, **characterised by** a store present switch (76) for detecting whether or not a store has been mounted on the release mechanism (16), the store present switch (76) being adapted to transmit a control signal when a store is present to initiate activation of the pressurized gas source (44) to thereby pressurize the accumulator (22), and being further adapted to transmit a control signal when a store is not present to prevent the actuation system from receiving pressurized gas from said source(44).

3. A system according to claim 1 or to claim 2, **characterised in that** the on-board source (44) of pressurized gas includes a compressor.

4. A system according to Claim 3, **characterised in that** the on-board source (44) of pressurized gas further includes a filter and/or drying unit (38).

5. A system according to any preceding claim, **characterised in that** there are a plurality of said release mechanisms (16), and a corresponding plurality of said actuation systems, the stores ejection system further including a manifold line (34) fluidly communicating the on-board source (44) of pressurized gas with each of the plurality of actuation systems.

6. A system according to Claim 5, **characterised in that** each of the said actuation systems further includes an enable valve (26) which is adapted to be actuated to an ON condition when the actuation system needs to be pressurized to attain the specified operating pressure and to be actuated to an OFF condition when the specified operating pressure is attained.

7. A system according to Claim 6, **characterised in that** the pressurized gas source (44) includes a controller (24) which is adapted to actuate the pressurized gas source (44) to an OFF condition when all of the actuation systems are pressurized to the specified operating pressure, and to actuate the pressurized gas source (44) to an ON condition when the operating pressure in at least one of the actuation systems falls more than a predetermined amount below the specified operating pressure.

8. A system according to any preceding claim, **characterised in that** the actuation system further includes an over-pressure valve (30) and an over-pressure vent (32), said over-pressure valve (30) being actuable by the controller to vent (32) the pressurized gas from the accumulator (22) through the over-pressure vent (32) whenever an over-pressure condition is detected in the accumulator (22) or when it is desired to disarm the release mechanism (16).

9. A system according to any one of Claims 1 to 4, **characterised in that** the release mechanism (16) further comprises a plurality of hooks (64, 66) for releasably retaining the store and a plurality of ejector pistons (16) for forcibly jettisoning the store away from the aircraft when the hooks (64, 66) have been actuated to a release position, both the hooks (64, 66) and the ejector pistons (16) being actuated to release and jettison the store by the pressurized gas exiting the accumulator (22) through the actuation system dump valve (28).

10. A system according to any preceding claim, **characterised by** a stores management system, the stores management system being adapted to provide the control signal to jettison the store.

11. A system according to any preceding claim **characterised in that** said specific operating pressure is greater than 41.37 x10⁶ Pa (6000 PSI).

## Patentansprüche

1. Vorratsausstoßsystem (10) zur Montage eines abwerfbaren Vorrats an ein Flugzeug, wobei das Vorratsausstoßsystem ein unter Druck gesetztes, nicht pyrotechnisches, Gas als Energiequelle verwendet und der Transfermechanismus umfasst:
wenigstens einen pneumatisch angetriebenen Auslöse- und Abwurfmechanismus (16) zur lösbaren Montage des Vorrats; und
ein Betätigungssystem für den Auslösemechanismus (16), einschließlich eines Speichers (22) zum Empfangen und Speichern des unter Druck gesetzten Gases, ein Schnellablassventil (28) und ein Steuergerät (24) zur Betätigung des Schnellablassventils (28) in eine offene Stellung reagierend auf ein Steuersignal für die Auslösung und den Abwurf des Vorrats, wobei das Schnellablassventil (28) bei Betätigung so funktioniert, dass es den Fluss des im Speicher (22) unter Druck gesetzten Gases zum Auslösemechanismus (16) gestattet, wodurch der Auslösemechanismus zum Abwerfen des Vorrats betätigt wird;
**gekennzeichnet durch** eine bordinterne Quelle (44) des unter Druck gesetzten, nicht pyrotechnischen Gases zur Bereitstellung der Energiequelle (44) und **durch** den Transfermechanismus (16); und **dadurch**, dass besagter Speicher besagtes unter Druck gesetztes Gas ab besagter, bordinterner Quelle des unter Druck gesetzten Gases mit einem spezifizierten Betriebsdruck empfängt und speichert,
wobei die bordinterne Quelle (44) des unter Druck gesetzten Gases adaptiert ist, den Speicher (22) im Betätigungssystem erneut unter Druck zu setzen, wann auch immer der Druck im Speicher (22) um einen vorbestimmten Betrag unter den spezifizierten Betriebsdruck fällt.

2. System nach Anspruch 1, **gekennzeichnet durch** einen Vorrats-Anwesenheitsschalter (76) zur Feststellung ob ein Vorrat auf dem Auslösemechanismus (16) montiert worden ist oder nicht, wobei der Vorrats-Anwesenheitsschalter adaptiert wird, um ein Steuersignal zu senden, wenn ein Vorrat vorhanden ist, um die Betätigung der unter Druck gesetzten Gasquelle (44) einzuleiten, um **dadurch** den Speicher (22) unter Druck zu setzen, und weiter adaptiert wird, um ein Steuersignal zu senden, wenn kein Vorrat vorhanden ist, um zu verhindern, dass das Betätigungssystem unter Druck gesetztes Gas ab besagter Quelle (44) empfängt.

3. System nach Anspruch 1 bzw. Anspruch 2, **dadurch gekennzeichnet, dass** die bordinterne Quelle (44) des unter Druck gesetzten Gases einen Kompressor einschließt.

4. System nach Anspruch 3, **dadurch gekennzeichnet, dass** die bordinterne Quelle (44) des unter Druck gesetzten Gases weiter eine Filter- und/oder Trockeneinheit (38) einschließt.

5. System nach einem beliebigen vorhergehenden Anspruch, **dadurch gekennzeichnet, dass** eine Vielheit besagter Auslösemechanismen (16) und eine entsprechende Vielheit besagter Betätigungssysteme vorhanden sind, und das Vorratsausstoßsystem weiter eine Verteilerleitung (34) einschließt, die fluid die bordinterne Quelle (44) von unter Druck gesetzten Gases mit jedem einer Vielheit von Betätigungssystemen kommuniziert.

6. System nach Anspruch 5, **dadurch gekennzeichnet, dass** jedes der besagten Betätigungssysteme weiter ein Aktivierungsventil (26) einschließt, das adaptiert ist in einen EIN-Zustand versetzt zu werden, wenn das Betätigungssystem unter Druck gesetzt werden muss, um den spezifizierten Betriebsdruck zu erreichen und in einem AUS-Zustand versetzt zu werden, wenn der spezifizierte Betriebsdruck erzielt ist.

7. System nach Anspruch 6, **dadurch gekennzeichnet, dass** die unter Druck gesetzte Gasquelle (44) ein Steuergerät (24) einschließt, das adaptiert ist die unter Druck gesetzte Gasquelle (44) in einen AUS-Zustand zu versetzen, wenn alle der Betätigungssysteme mit dem spezifizierten Betriebsdruck unter Druck gesetzt sind, und die unter Druck gesetzte Gasquelle (44) in einen EIN-Zustand zu versetzen, wenn der Betriebsdruck in wenigstens einem der Betätigungssysteme um mehr als einen vorbestimmten Betrag unter den spezifizierten Betriebsdruck fällt.

8. System nach einem beliebigen vorhergehenden Anspruch, **dadurch gekennzeichnet, dass** das Betätigungssystem weiter ein Überdruckventil (30) und eine Überdruckentlüftung (32) einschließt, wobei besagtes Überdruckventil (30) vom Steuergerät betätigbar, um (32) das unter Druck gesetzte Gas aus dem Speicher )22) durch die Überdruckentlüftung (32) zu entlüften, wenn ein Überdruckzustand im Speicher (22) festgestellt wird, oder wenn es wünschenswert ist den Auslösemechanismus (16) zu entwaffnen.

9. System nach einem der vorhergehenden Ansprüche 1 bis 4, **dadurch gekennzeichnet, dass** der Auslösemechanismus (16) weiter eine Vielheit von Haken (64,66) zum lösbaren Festhalten des Vorrats und eine Vielheit von Ausstoßkolben(16) zum forcierten Abwerfen des Vorrats vom Flugzeug weg, wenn die Haken (64,66) in eine Auslöseposition versetzt worden sind, umfasst, wobei beide Haken (64,66) und die Ausstoßkolben (16) betätigt werden, um den Vorrat zu lösen und abzuwerfen, indem das unter Druck gesetzte Gas den Speicher (22) durch das Schnellablassventil (28) des Betätigungssystem verlässt.

10. System nach einem beliebigen vorhergehenden Anspruch, **gekennzeichnet durch** ein Vorrats-Managementsystem, wobei das Vorrats-Managementsystem adaptiert wird ein Steuersignal zum Abwerfen des Vorrats bereitzustellen.

11. System nach einem beliebigen vorhergehenden Anspruch, **dadurch gekennzeichnet, dass** besagter spezifische Betriebsdruck größer als 41.37 x 10⁶ Pa (6000 PSI) ist.

## Revendications

1. Système d'éjection de magasins (10) destiné à monter sur un avion un magasin largable, le système d'éjection de magasins utilisant un gaz sous pression non pyrotechnique en tant que source d'énergie et mécanisme de transfert, et comprenant :
au moins un mécanisme de libération et de largage actionné de manière pneumatique (16) pour fixer le magasin de manière amovible ; et
un système d'actionnement destiné au mécanisme de libération (16), comprenant un aocumulateur (22) destiné à recevoir et stocker le gaz sous pression, un clapet de décharge (28), et un dispositif de commande (24) destiné à actionner le clapet de décharge (28) afin de l'amener dans une position ouverte en réponse à un signal de commande pour libérer et larguer le magasin, le clapet de décharge (28), lorsqu'il est actionné, fonctionnant pour permettre au gaz sous pression de l'accumulateur (22) de circuler vers le mécanisme de libération (16), moyennant quoi on actionne le mécanisme de libération pour larguer le magasin ;
**caractérisé en ce qu'**une source embarquée (44) du gaz sous pression non pyrotechnique est destinée à alimenter la source (44) d'énergie et le mécanisme de transfert (16) ; et **en ce que** ledit accumulateur reçoit et stocke ledit gaz sous pression provenant de ladite source embarquée de gaz sous pression à une pression de fonctionnement spécifiée ;
dans lequel la source embarquée (44) de gaz sous pression est agencée pour remettre sous pression l'accumulateur (22) du système d'actionnement chaque fois que la pression de l'accumulateur (22) chute d'une quantité prédéterminée en dessous de la pression de fonctionnement spécifiée.

2. Système selon la revendication 1, **caractérisé en ce qu'**un détecteur de présence de magasin (76) est destiné à détecter si un magasin a été fixé sur le mécanisme de libération (16), le détecteur de présence de magasin (76) étant agencé pour émettre un signal de commande lorsqu'un magasin est présent pour déclencher l'activation de la source de gaz sous pression (44), pour ainsi mettre sous pression l'accumulateur (22), et étant en outre agencé pour émettre un signal de commande en cas d'absence de magasin, afin d'empêcher le système d'actionnement de recevoir du gaz sous pression provenant de ladite source (44).

3. Système selon la revendication 1 ou la revendication 2, **caractérisé en ce que** la source embarquée (44) de gaz sous pression comprend un compresseur.

4. Système selon la revendication 3, **caractérisé en ce que** la source embarquée (44) de gaz sous pression comprend en outre un filtre et/ou une unité de séchage (38).

5. Système selon l'une quelconque des revendications précédentes, **caractérisé en ce qu'**il est prévu une pluralité de dits systèmes de libération (16), et une pluralité correspondante de dits systèmes d'actionnement, le système d'éjection de magasins comprenant en outre une ligne de collecteurs (34) mettant en communication fluidique la source embarquée (44) de gaz sous pression avec chacun de la pluralité de systèmes d'actionnement.

6. Système selon la revendication 5, **caractérisé en ce que** chacun desdits systèmes d'actionnement comprend un clapet de commande (26) qui est agencé pour être actionné dans un état de marche lorsque le système d'actionnement doit être mis sous pression pour atteindre la pression de fonctionnement spécifiée, et pour être actionné dans un état d'arrêt lorsque la pression de fonctionnement spécifiée a été atteinte.

7. Système selon la revendication 6, **caractérisé en ce que** la source de gaz sous pression (44) comprend un dispositif de commande (24) qui est agencé pour actionner la source de gaz sous pression (44) dans un état d'arrêt lorsque tous les systèmes d'actionnement sont mis sous pression à la pression de fonctionnement spécifiée, et pour actionner la source de gaz sous pression (44) dans un état de marche lorsque la pression de fonctionnement dans au moins un des systèmes d'actionnement chute de plus d'une quantité prédéterminée en dessous de la pression de fonctionnement spécifiée.

8. Système selon l'une quelconque des revendications précédentes, **caractérisé en ce que** le système d'actionnement comprend en outre un clapet de surpression (30) et une évacuation de surpression (32), ledit clapet de surpression (30) pouvant être actionné par le dispositif de commande pour évacuer (32) le gaz sous pression à partir de l'accumulateur (22) en passant par l'évacuation de surpression (32) si un état de surpression est détecté dans l'accumulateur (22), ou s'il est souhaitable de mettre hors service le mécanisme de libération (16).

9. Système selon l'une quelconque des revendications 1 à 4, **caractérisé en ce que** le mécanisme de libération (16) comprend en outre une pluralité de crochets (64, 66) destinés à retenir le magasin de manière amovible, et une pluralité de pistons d'éjection (16) destinés à larguer de force le magasin à l'extérieur de l'avion lorsque les crochets (64, 66) ont été actionnés dans un état de libération, à la fois les crochets (64, 66) et les pistons d'éjection (16) étant actionnés pour libérer et larguer le magasin grâce au gaz sous pression qui sort de l'accumulateur (22) en passant par le clapet de décharge du système d'actionnement (28).

10. Système selon l'une quelconque des revendications précédentes, **caractérisé par** un système de gestion des magasins, le système de gestion des magasins étant agencé pour délivrer le signal de commande permettant de larguer le magasin.

11. Système selon l'une quelconque des revendications précédentes, **caractérisé en ce que** ladite pression de fonctionnement spécifique est supérieure à 41,37 x 10⁶ Pa (6 000 psi).
